# EUROPEAN PATENT APPLICATION

(11) **EP 4 219 046 A1**
(43) Date of publication of application: **02.08.2023**
(21) Application number: 23153238.3
(22) Date of filing: 25.01.2023
(51) Int. Cl.: B22F 9/08

(54) **METAL POWDER MANUFACTURING APPARATUS AND CONTROL METHOD THEREOF**

(30) Priority: 31.01.2022 JP 2022013192; 14.12.2022 JP 2022199593
(71) Applicant: Mitsubishi Heavy Industries, Ltd., Tokyo 100-8332 (JP)
(72) Inventor: SHIBAYAMA, Takashi, Chiyoda-ku, Tokyo, 100-8332 (JP); IMANO, Shinya, Chiyoda-ku, Tokyo, 100-8332 (JP)
(74) Representative: Hoffmann Eitle

(57) **Abstract**

A control method of a metal powder manufacturing apparatus, the metal powder manufacturing apparatus including a crucible housed in a dissolving tank, a molten metal nozzle attached to a bottom surface of the crucible, a plurality of gas injecting nozzles arranged on a periphery of the molten metal nozzle within a spray tank, and an orifice portion disposed in an upstream portion of a flow passage in the molten metal nozzle, an inside diameter of the orifice portion being equal to or more than 0.8 mm and equal to or less than 3 mm, the control method including: making a pressure (Ps) of the spray tank higher than a total value of pressure (Ph) acting on an upper end of the molten metal nozzle and a pressure (Pm) of the dissolving tank when a melting raw material is molten within the crucible; and making the pressure (Ps) of the spray tank lower than the total value of the pressure (Ph) acting on the upper end of the molten metal nozzle and the pressure (Pm) of the dissolving tank when a molten metal within the crucible is made to flow down into the spray tank via the molten metal nozzle.

## Description

### BACKGROUND OF THE INVENTION

### 1. Field of the Invention

The present invention relates to a metal powder manufacturing apparatus and a control method thereof.

### 2. Description of the Related Art

As a metal powder manufacturing apparatus, there is a gas atomizer (gas atomizing apparatus) that manufactures fine metal powder by making a molten metal flow down from a molten metal nozzle provided to a lower portion of a crucible housed in a dissolving tank and retaining the molten metal, and spraying an inert gas to the molten metal from a gas injecting nozzle including a plurality of injection holes arranged on the periphery of the molten metal nozzle within a spray tank.

Recently, due to the spread of a 3D printing technology, there has been an increasing need for metal powder having a smaller particle diameter than metal powder conventionally desired for an atomizing method. The particle diameter of conventional metal powder used for powder metallurgy, welding, or the like is, for example, approximately 70 to 100 um. However, the particle diameter of metal powder used for three-dimensional printers is, for example, approximately 20 to 50 um, which is very small.

A method for efficiently manufacturing fine metal powder in a metal powder manufacturing apparatus in Patent Document 1 (International Publication WO2019/112052) increases an amount of metal flow rate per unit time in one spray tank by increasing the number of molten metal nozzles within the spray tank. This obviates a need for an increase (change) in gas pressure without a change in cross-sectional area of each of the molten metal nozzles. It is therefore possible to manufacture fine metal powder efficiently without changing the body shape of the spray tank.

### [Prior Art Document]

### [Patent Document]

### [Patent Document 1]

PCT Patent Publication No. WO2019/112052

### SUMMARY OF THE INVENTION

The gas atomizer is usually provided with a stopper that closes an opening portion of the crucible coupled to the molten metal nozzle when a melting raw material is molten within the crucible to which the molten metal nozzle is attached. When the melting raw material is to be molten, the melting raw material is introduced into the crucible in a state in which the stopper closes the opening portion of the crucible, and the crucible is heated by a heater. After completion of the melting of the melting raw material, the stopper is moved upward, and the stopper is separated from the opening portion of the crucible. The molten metal is thereby made to flow down (tapped) from the molten metal nozzle. The manufacturing of metal powder is thus started.

Thus, the stopper is necessary for tapping control of the molten metal. However, the stopper is positioned within the crucible at a time of the melting of the melting raw material, and therefore limits the shape of the melting raw material. In particular, when a plurality of molten metal nozzles are attached to one crucible, the same number of stoppers as that of the molten metal nozzles is necessary. Hence, the shape of the melting raw material can be further limited, and cost is increased according to the number of the stoppers.

It is an object of the present invention to provide a metal powder manufacturing apparatus and a control method thereof that can mitigate limitation on the shape of the melting raw material to be introduced into the crucible.

The present application includes a plurality of means for solving the above-described problems. To cite an example of the means, there is provided a control method of a metal powder manufacturing apparatus, the metal powder manufacturing apparatus including a crucible that is housed in a dissolving tank, and that can receive a melting raw material before being molten, a molten metal nozzle that is attached to an opening portion disposed in a bottom surface of the crucible, and that has a lower end located within a spray tank, a plurality of gas injecting nozzles that are arranged on a periphery of the molten metal nozzle within the spray tank, and that jet a gas fluid to a molten metal made to flow down from the molten metal nozzle, and an orifice portion that is disposed in an upstream portion of a flow passage in the molten metal nozzle, an inside diameter of the orifice portion being equal to or more than 0.8 mm and equal to or less than 3 mm, the control method including: making a pressure of the spray tank higher than a total value of pressure acting on an upper end of the molten metal nozzle and a pressure of the dissolving tank when the melting raw material is molten within the crucible; and making the pressure of the spray tank lower than the total value when the molten metal within the crucible is made to flow down into the spray tank via the molten metal nozzle.

According to the present invention, at least one stopper can be omitted. It is therefore possible to mitigate limitation on the shape of the melting raw material to be introduced into the crucible, and simplify the apparatus and reduce a risk of damaging parts.

### BRIEF DESCRIPTION OF THE DRAWINGS

FIG. 1 is a general configuration diagram of a gas atomizing apparatus (gas atomizer) as a metal powder manufacturing apparatus according to an embodiment of the present invention;
FIG. 2 is a sectional view of a molten metal nozzle 11 and a gas injector 200 and vicinities thereof in the gas atomizing apparatus according to the embodiment of FIG. 1;
FIG. 3 is a diagram showing one of modifications of the molten metal nozzle (orifice portion);
FIG. 4 is a diagram showing one of the modifications of the molten metal nozzle (orifice portion); and
FIG. 5 is a diagram obtained by summarizing results of observing whether or not tapping and powder formation are possible for fifteen cases under different conditions during the holding of a molten metal (during the melting of a raw material).

### DESCRIPTION OF THE PREFERRED EMBODIMENT

An embodiment of the present invention will hereinafter be described with reference to the drawings.

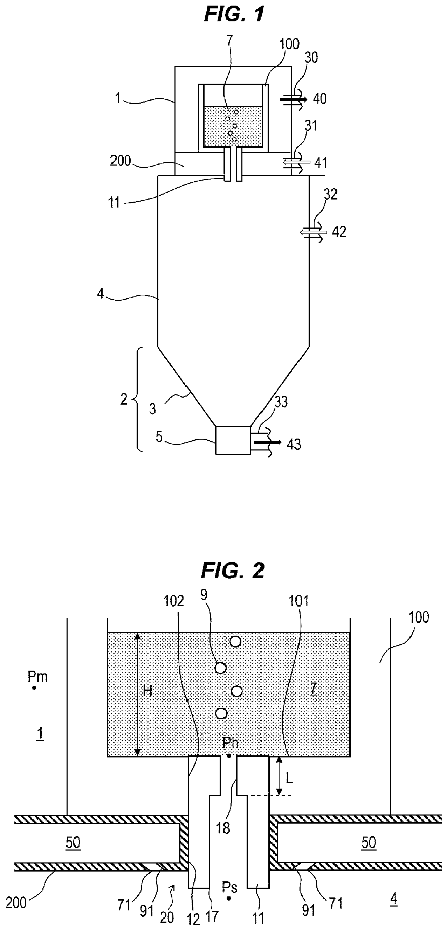

FIG. 1 is a general configuration diagram of a gas atomizing apparatus (gas atomizer) as a metal powder manufacturing apparatus according to the embodiment of the present invention. The gas atomizing apparatus of FIG. 1 includes: a dissolving tank 1 housing a crucible (referred to also as a tundish) 100 that stores a molten metal 7 as a metal in a liquid form; a gas injector 200 that liquid-sprays the molten metal by spraying a high-pressure gas (gas fluid) onto the molten metal flowing down as a small stream from the crucible 100 via a molten metal nozzle 11 and thus pulverizing the molten metal into a large number of particulates (metal particles); a gas supply pipe (injection fluid supply pipe) 31 for supplying a high-pressure gas 41 to the gas injector 200; and a spray tank 4 that is a container held in an inert gas atmosphere and in which the liquid metal in a particulate form, which is sprayed from the gas injector 200, is solidified by rapid cooling while dropping.

### (Dissolving Tank 1)

The inside of the dissolving tank 1 is preferably held in an inert gas atmosphere. Here, the pressure of the dissolving tank 1 is denoted as Pm. A gas discharge pipe 30 is connected to the dissolving tank 1. An inert gas 40 within the dissolving tank 1 can be exhausted from the gas discharge pipe 30 to the outside of the apparatus (outside of the dissolving tank 1). An exhaust amount of the gas discharge pipe 30 can be adjusted by changing an opening degree of a valve not shown, for example. The pressure Pm within the dissolving tank 1 can be thereby adjusted to a desired value. Incidentally, a gas supply pipe for gas supply may be further connected to the dissolving tank 1, and the pressure Pm within the dissolving tank 1 may be adjusted by adjusting a gas supply amount of the gas supply pipe and the exhaust amount of the gas discharge pipe 30.

### (Crucible 100)

The crucible 100 can receive a melting raw material (metal) before being molten. A heating device for heating and melting the melting raw material (for example, a high frequency heating coil (not shown) wound around the periphery of the crucible 100) is attached around the periphery of the crucible 100. In addition, the molten metal nozzle 11 that makes the molten metal 7 within the crucible 100 flow down into the spray tank 4 is attached to the crucible 100.

### (Spray Tank 4)

The spray tank 4 is a cylindrical container, an upper portion and a middle portion of which have a same diameter. Here, the pressure of the spray tank 4 is denoted as Ps. A gas supply pipe 32 is connected to the spray tank 4. An inert gas 42 can be supplied from the gas supply pipe 32 to the spray tank 4. As the supplied gas, a reducing gas may be used for a purpose of removing oxygen in the molten metal, or the like. A gas supply amount of the gas supply pipe 32 can be adjusted by changing an opening degree of a valve not shown, for example. The pressure Ps within the spray tank 4 can be thereby adjusted to a desired value. Incidentally, a gas discharge pipe for exhaustion may be further connected to the spray tank 4, and the pressure Ps within the spray tank 4 may be adjusted by adjusting an exhaust amount of the gas discharge pipe and the gas supply amount of the gas supply pipe 32.

### (Hopper 2)

A hopper 2 is provided to a lower portion of the spray tank 4. The hopper 2 is to collect a solid metal in a powder form, which is solidified while dropping within the spray tank 4. The hopper 2 includes a collecting portion 5 and a tapered portion 3. The tapered portion 3 is decreased in diameter toward the collecting portion 5 from a viewpoint of facilitating the collection of the metal powder by the hopper 2. A lower end of the tapered portion 3 is connected to an upper end of the collecting portion 5. The collecting portion 5 is located on a downstream side in a flow direction of the inert gas. A gas discharge pipe 33 is connected to the collecting portion 5. An inert gas 43 is exhausted from the gas discharge pipe 33 to the outside of the apparatus together with the solidified metal powder.

FIG. 2 is a sectional view of the molten metal nozzle 11 and the gas injector 200 and vicinities thereof in the gas atomizing apparatus according to the present embodiment.

### (Molten Metal Nozzle 11)

As shown in FIG. 2, an opening portion 102 is provided to a bottom surface 101 (bottom portion) of the crucible 100, and the molten metal nozzle 11 is attached to the opening portion 102. The molten metal nozzle 11 is to make the molten metal 7 within the crucible 100 flow down into the spray tank 4. The molten metal nozzle 11 is provided so as to project vertically downward from the bottom surface of the crucible 100. The molten metal nozzle 11 has a vertically long hole that extends in a vertical direction and within which the molten metal flows down.
This vertically long hole serves as a molten metal flow passage through which the molten metal flows down vertically downward from the bottom surface 101 of the crucible 100. The number of molten metal nozzles 11 to be attached to the crucible 100 is not limited to one, but two or more molten metal nozzles 11, for example, may be provided.

An opening end 17 located at a lower end of the molten metal nozzle 11 is located within the spray tank 4 so as to project from the bottom surface of the gas injector 200. The molten metal within the crucible 100 flows down as a molten metal flow through the hole within the molten metal nozzle 11, and is discharged (made to flow down) into the spray tank 4 via the opening end 17.

### (Orifice Portion 18)

A minimum inside diameter of the molten metal nozzle 11 is defined by the inside diameter of an orifice portion 18 provided to the inside of the molten metal nozzle 11 (orifice diameter). This orifice diameter (minimum inside diameter of the molten metal nozzle 11) contributes to the size of the diameter of the molten metal introduced into the spray tank 4. The minimum inside diameter of the molten metal nozzle 11 can be set at a value equal to or less than the diameter of the opening end 17 of the molten metal nozzle 11.

The orifice portion 18 is preferably provided to an upstream portion of the flow passage of the molten metal in the molten metal nozzle 11. If possible, the orifice portion 18 is preferably provided to an upper end of the flow passage of the molten metal in the molten metal nozzle, as shown in FIG. 2. Incidentally, the upstream portion refers to a part located on the crucible 100 side when the flow passage length of the molten metal nozzle 11 is divided into three parts. Of the three divided parts of the flow passage length of the molten metal nozzle 11, a part on a downstream side of the upstream portion will be referred to as a "central portion," and a part on a downstream side of the central portion will be referred to as a "downstream portion."

As shown in FIG. 2, the orifice portion 18 may have a predetermined length L in an upward-downward direction. The length L is preferably set to be 10 mm or less. If possible, the length L is preferably set to be equal to or more than 1 mm and equal to or less than 5 mm. The flow passage of the orifice portion 18 may be clogged with a solidified molten metal. The clogging is resolved easily when the length L is set to be 10 mm or less (more preferably 5 mm or less). When the length L is too short, however, a possibility of impairing stability of the flow of the molten metal (possibility of shifting the axis of the molten metal flow) is increased. The length L is therefore preferably set to be equal to or more than 1 mm.

The inside diameter of the orifice portion 18 is preferably set to be equal to or more than 0.8 mm and equal to or less than 3 mm. If possible, the inside diameter of the orifice portion 18 is preferably set to be equal to or more than 1 mm and equal to or less than 2 mm. When the inside diameter is set to be equal to or more than 3 mm, a run-out (unintended tapping) can occur in which a few drops of the molten metal drop into the dissolving tank through the orifice during the holding of the molten metal. When the inside diameter is too small, however, a possibility of impairing stability of the flow rate of the molten metal is increased. The inside diameter is therefore preferably set to be equal to or more than 0.8 mm.

### (Gas Injector 200)

As shown in FIG. 2, the gas injector 200 having a substantially cylindrical external shape includes a molten metal nozzle insertion hole 12 into which the molten metal nozzle 11 is inserted and gas injecting nozzles 71 that pulverize the molten metal flowing down from the molten metal nozzle 11 by injecting gas to the molten metal. The gas injector 200 has a cylindrical external shape of a hollow structure filled with an inert high-pressure gas.
The inside of the gas injector 200 serves as a gas flow passage 50 in which a gas flow is formed around the molten metal nozzle insertion hole 12. The gas flow passage 50 is supplied with the high-pressure gas 41 from the gas supply pipe 31 connected to a gas suction hole (not shown) provided to the side surface of the gas injector 200 (side surface of a circular cylinder).

### (Gas Injecting Nozzles 71)

The gas injecting nozzles 71 include a plurality of injection holes (through holes) 91 arranged so as to describe a circle around the molten metal nozzle insertion hole 12. The gas injecting nozzles 71 inject gas from the plurality of injection holes 91 to the molten metal flowing down from the molten metal nozzle 11.

### (Spray Nozzle 20)

The injecting nozzle 71 and the molten metal nozzle 11 constitute a spray nozzle 20 that liquid-sprays the molten metal into the spray tank 4.

### (Pressure Ph Acting on Upper End of Molten Metal Nozzle 11)

At least one of pressures Ph (see FIG. 2) acting on an upper end of the molten metal nozzle 11 is a pressure caused by the weight of the molten metal 7 within the crucible 100. This pressure will be referred to as a head pressure of the molten metal 7. The head pressure can be computed on the basis of the density and quantity (volume) of the melting raw material introduced into the crucible 100. The quantity (volume) of the melting raw material can, for example, be grasped from a liquid surface height (molten metal surface height) H of the molten metal 7.
Incidentally, the pressure acting on the upper end of the molten metal nozzle 11 includes pressures other than the head pressure, such as the surface tension of the molten metal.

### (Control of Gas Atomizing Apparatus)

Control (usage method) of the gas atomizing apparatus configured as described above will be described.

First, the molten metal 7 is prepared by introducing the melting raw material into the crucible 100, and heating the crucible 100. While the melting raw material is being molten within the crucible 100, the pressure Ps of the spray tank 4 is held higher than a total value of the pressure Pm of the dissolving tank 1 and the pressure Ph acting on the upper end of the molten metal nozzle 11 (that is, Pm + Ph < Ps is maintained) so that the molten metal 7 does not flow down into the spray tank 4 via the molten metal nozzle 11 (that is, so that the molten metal 7 is held within the crucible 100). The pressure Ph acting on the upper end of the molten metal nozzle 11 are a value related to the density and quantity of the melting raw material, as described above. Thus, the pressure Pm of the dissolving tank 1 and the pressure Ps of the spray tank 4 are adjusted so as to satisfy the pressure condition (Pm + Ph < Ps). The adjustment of the pressure Ps of the spray tank 4 is made by gas supply to the spray tank 4 by the gas supply pipe 32. The adjustment of the pressure Pm of the dissolving tank 1 is made by gas discharge from the dissolving tank 1 by the gas discharge pipe 30. The pressure Ps of the spray tank 4 rises when the inert gas 42 is supplied from the gas supply pipe 32 to the inside of the spray tank 4. In addition, the pressure Pm of the dissolving tank 1 is lowered when the inert gas 40 is discharged from the gas discharge pipe 30 to the outside of the dissolving tank 1. Incidentally, the pressures Pm and Ps of the dissolving tank 1 and the spray tank 4 may be adjusted automatically by installing a pressure gage within each of the dissolving tank 1 and the spray tank 4, inputting the values of the respective pressure gages to a controller such as a computer, and outputting control signals (opening degree commands) from the controller to the respective valves of the gas discharge pipe 30 and the gas supply pipe 31 so as to satisfy Pm + Ph < Ps. In addition, a bypass that couples the dissolving tank and the spray tank to each other may be formed, with a compressor provided between the dissolving tank and the spray tank, and a pressure difference may be controlled while gas is circulated.

When the pressures Pm and Ps are adjusted so as to satisfy Pm + Ph < Ps, the molten metal 7 can be held within the crucible 100 even without a stopper as in the past. At this time, the inert gas 42 within the spray tank 4 flows backward into the crucible 100 via the molten metal nozzle 11, and bubbles 9 (see FIG. 2) occur in the molten metal 7 within the crucible 100. The gas thus flowing from the spray tank 4 into the dissolving tank 1 can raise the pressure Pm of the dissolving tank 1. However, the pressure Pm of the dissolving tank 1 can be stabilized (that is, the pressure Pm can be maintained in a state close to a predetermined value) by discharging the gas from the gas discharge pipe 30 connected to the dissolving tank 1 to the outside of the dissolving tank 1 as appropriate.

After the melting of the melting raw material is completed, metal powder is manufactured by injecting gas from the gas injecting nozzles 71 while tapping from the molten metal nozzle 11 is started (referred to also as tapping operation). When the tapping is started (when the spraying of the molten metal within the spray tank 4 is started), the pressure Ps of the spray tank 4 is made lower than the total value of the pressure Pm of the dissolving tank 1 and the pressure Ph acting on the upper end of the molten metal nozzle 11. That is, settings are made such that Pm + Ph > Ps, and thus pressure magnitude relation is reversed from that at the time of the melting of the raw material. When the pressures are thus controlled, the molten metal 7 within the crucible 100 can be made to flow down into the spray tank 4 via the molten metal nozzle 11. Then, during the tapping, the pressures Pm and Ps are adjusted so as to satisfy Pm + Ph > Ps.

Incidentally, when the molten metal nozzle 11 is clogged, the clogging may be able to be resolved by making the pressure Pm of the dissolving tank 1 higher than that in a case without the clogging at the time of the tapping. There is a possibility of a sharp rise in the pressure Ps of the spray tank 4 when the clogging can be resolved. It is therefore preferable to reduce the pressure Ps of the spray tank 4 by connecting a gas discharge pipe to the spray tank 4, and discharging the gas to the outside of the spray tank 4 via the gas discharge pipe. That is, the gas discharge pipe connected to the spray tank 4 can prevent the pressure Ps of the spray tank 4 from rising sharply when the molten metal nozzle 11 is clogged, so that the pressure Ps of the spray tank 4 can be stabilized.

### (Effects)

As described above, in the present embodiment, the gas atomizing apparatus is controlled such that the pressure Ps of the spray tank 4 is made higher than the total value of the pressure Ph acting on the upper end of the molten metal nozzle 11 and the pressure Pm of the dissolving tank 1 when the melting raw material is molten within the crucible 100, and such that the pressure Ps of the spray tank is made lower than the total value of the pressure Ph acting on the upper end of the molten metal nozzle 11 and the pressure Pm of the dissolving tank 1 when the molten metal 7 within the crucible 100 is made to flow down into the spray tank 4 via the molten metal nozzle 11. When the gas atomizing apparatus is thus controlled, the molten metal 7 can be held within the crucible 100 by the pressure difference between the dissolving tank 1 and the spray tank 4, which is generated during the melting of the raw material. The stopper conventionally used during the melting of the raw material can therefore be omitted. It is thereby possible to mitigate limitation on the shape of the melting raw material to be introduced into the crucible 100, and simplify the gas atomizing apparatus and eliminate the trouble of replacement at a time that the stopper is damaged.

In addition, the gas atomizing apparatus described above has the orifice portion 18 provided to the upstream portion of the flow passage (preferably the upper end of the flow passage) in the molten metal nozzle 11. When the gas in the spray tank 4 is introduced into the crucible 100 via the molten metal nozzle 11 at the time of the melting of the raw material, the molten metal may be solidified by the gas, and the orifice portion 18 may be thereby clogged. However, when the orifice portion 18 is provided to the upstream portion of the molten metal nozzle 11 as in the present embodiment, the molten metal 7 maintained at a high temperature within the crucible 100 and the orifice portion 18 are at a close distance to each other. Thus, the clogging is easily molten again by the heat of the molten metal 7, so that the occurrence of the clogging at the time of the tapping can be suppressed. In addition, the inventor et al. have noticed that the clogging tends to occur in the molten metal nozzle 11 when the bubbles 9 occurring within the crucible 100 during the melting of the raw material (while the molten metal 7 is held) become small, but have found that when the orifice portion 18 is provided at the above-described position, the reduction in size of the bubbles 9 during the melting of the raw material can be suppressed, and consequently the occurrence of the clogging can be suppressed.

It is to be noted that while the above description has been made of a case where only one molten metal nozzle 11 is attached to the crucible 100, the present embodiment can also be applied to a gas atomizing apparatus in which a plurality of molten metal nozzles 11 are attached to the crucible 100, and a gas injecting nozzle 71 is arranged on the periphery of each of the plurality of molten metal nozzles 11. When the molten metal nozzles 11 are thus plurally present, it is possible to omit at least one stopper, or omit all stoppers. A synergistic effect corresponding to the number of stoppers that can be omitted is obtained, and therefore each of the above-described effects attendant on the omission of the stoppers becomes noticeable.

### <Modification of Molten Metal Nozzle (Orifice Portion)>

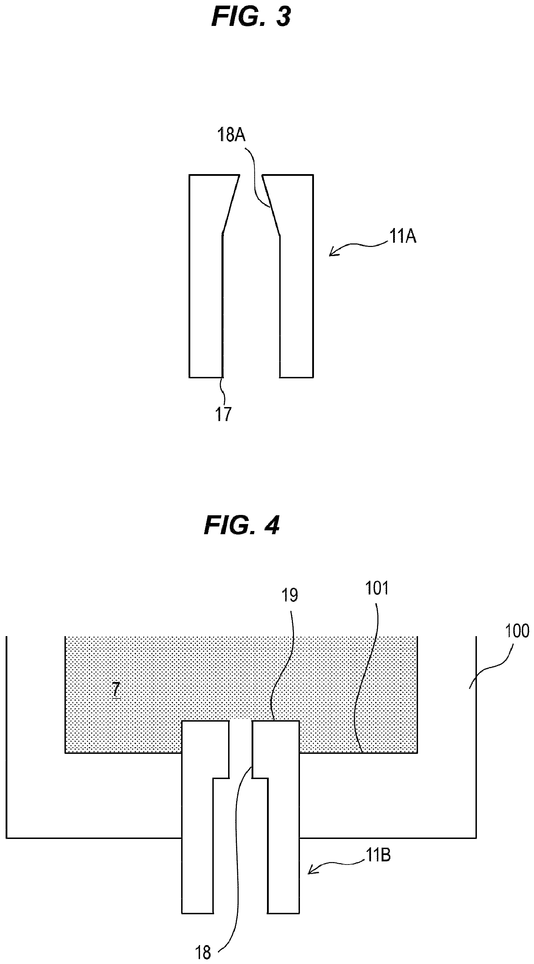

FIG. 3 is a diagram showing one of modifications of the molten metal nozzle (orifice portion). A molten metal nozzle 11A of FIG. 3 has an orifice portion 18A including a reversely tapered flow passage that increases in inside diameter toward a lower end (opening end 17) of the molten metal nozzle 11A. In a case where such an orifice portion 18A is provided, even when clogging occurs below the upper end of the molten metal nozzle 11 (orifice portion 18A) during the melting of the raw material (during the holding of the molten metal 7), the molten metal 7 is easily introduced to the position of the clogging because the flow passage is enlarged downward, so that the clogging is resolved easily at the time of the tapping.

FIG. 4 is a diagram showing one of the modifications of the molten metal nozzle (orifice portion). A molten metal nozzle 11B of FIG. 4 has an upper end 19 thereof located above the bottom surface 101 of the crucible 100. When the molten metal nozzle 11B is thus configured, the orifice portion 18 can be brought closer to the molten metal 7 maintained at a high temperature within the crucible 100 as compared with the case shown in FIG. 2, so that the occurrence of clogging at the time of the tapping can be further suppressed. In addition, during the melting of the raw material (during the holding of the molten metal 7), the orifice portion 18 is heated by the peripheral molten metal 7, and therefore there is also an advantage in that clogging does not occur easily.

### <Examples>

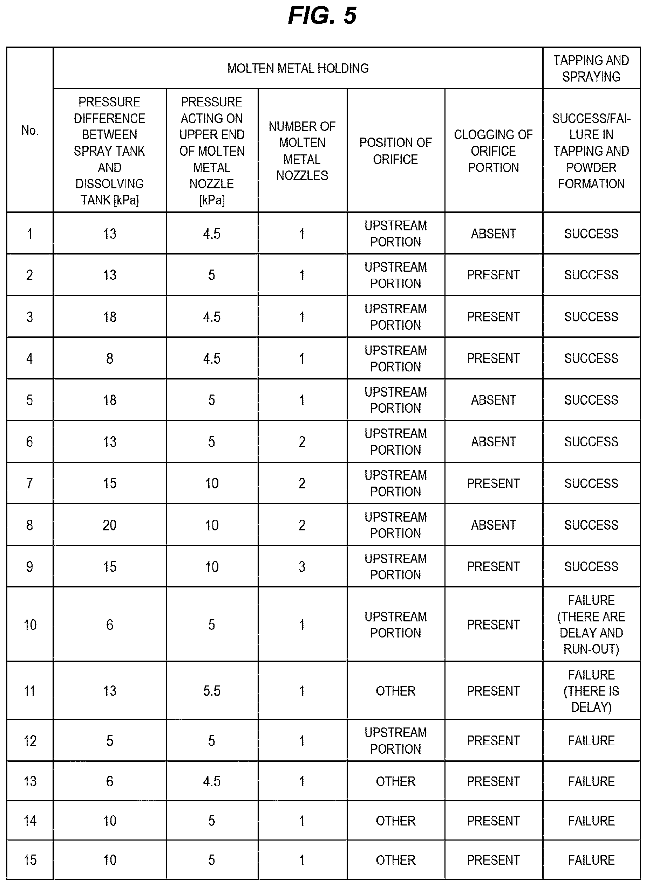

FIG. 5 is a diagram obtained by observing whether or not tapping and powder formation are possible for fifteen cases under different conditions during the holding of the molten metal (during the melting of the raw material), and summarizing results of the observation as examples. Here, numbers in the diagram will be described as the numbers of the respective examples (for example No.1 in the diagram will be referred to as a first example). Incidentally, suppose that conditions not described in the diagram (for example, the inside diameter and length of the orifice) are common to each of the examples.

Conditions during the holding of the molten metal include a pressure difference [kPa] between the spray tank and the dissolving tank, the pressure acting on the upper end of the molten metal nozzle [kPa], the number of molten metal nozzles, and an orifice position. Of these conditions, the "pressure difference [kPa] between the spray tank and the dissolving tank" represents a difference between measured values of the pressure Ps of the spray tank 4 and the pressure Pm of the dissolving tank 1 (Ps - Pm). The "pressure acting on the upper end of the molten metal nozzle [kPa]" is the pressure Ph shown in FIG. 2. The "number of molten metal nozzles" represents the number of molten metal nozzles 11 attached to one crucible 100. An "upstream portion" in the "orifice position" represents a case where the orifice portion 18 is provided at a position within 10 mm of the upper end of the molten metal nozzle 11, and "other" represents a case where the orifice portion 18 is provided at a position lower than a position 10 mm from the upper end of the molten metal nozzle 11. The "clogging of the orifice portion" is determined from conditions of occurrence of the bubbles 9 during the holding of the molten metal. It was determined that there was no clogging when bubbles occurred. It was determined that there was clogging when the occurrence of the bubbles 9 was stopped. Incidentally, even when it is determined that clogging has occurred during the holding of the molten metal, it is determined that there is no problem in terms of usage when tapping is possible. "Success/failure in tapping and powder formation" was determined on the basis of whether or not the tapping was started immediately after the tapping operation (that is, after settings were made such that Pm + Ph > Ps).

The results of the respective examples are summarized as follows.

In some of the first to nineth examples, orifice clogging occurred during the holding of the molten metal, but in each of the first to nineth examples, prompt tapping was observed when the tapping operation was performed. In the tenth to eleventh examples, the tapping was observed with a delay of one minute or more after the tapping operation, which was judged to be impractical, and therefore it was determined that the tapping and powder formation resulted in a "failure." Incidentally, in the tenth example, a run-out (unintended tapping) occurred in that a few drops of the molten metal passed through the orifice and dropped into the dissolving tank during the holding of the molten metal. In each of the twelfth to fifteenth examples, no tapping was observed.

In the eleventh and thirteenth to fifteenth examples in which the orifice portion was provided in other than the upstream portion, tapping and powder formation resulted in a "failure."

Of the first to tenth and twelfth examples in which the orifice portion was provided in the upstream portion, in the tenth and twelfth examples in which a difference between the pressure difference and the pressure acting on the upper end of the molten metal nozzle (that is, Ps - Pm - Ph) was 1 [kPa] and 0 [kPa], tapping and powder formation resulted in a "failure." On the other hand, in the first to ninth examples in which the difference between the pressure difference and the pressure acting on the upper end of the molten metal nozzle was equal to or more than 3.5 [kPa], tapping and powder formation resulted in a "success." Hence, it has been found that the difference between the pressure difference and the pressure acting on the upper end of the molten metal nozzle is preferably at least larger than 1 [kPa] (that is, the pressure of the spray tank 4 is preferably higher by at least 1 [kPa] than the total value of the pressure of the dissolving tank 1 and the pressure acting on the upper end of the molten metal nozzle 11 (that is, Ps > Pm + Ph + 1 [kPa])), and is more preferably equal to or more than 3.5 [kPa] (that is, Ps > Pm + Ph + 3.5 [kPa]). In addition, when the difference (not shown in FIG. 5) between the pressure difference and the pressure acting on the upper end of the molten metal nozzle (that is, Ps - Pm - Ph [kPa]) was larger than 20 [kPa], the molten metal spattered, the flow of the molten metal became unstable, and a protecting pipe of a thermocouple was broken. Hence, it has been found that the pressure of the spray tank 4 is preferably controlled so as to be lower than 20 [kPa] with respect to the total value of the pressure acting on the upper end of the molten metal nozzle 11 and the pressure of the dissolving tank 1 (that is, 20 [kPa] + Pm + Ph > Ps), and is more preferably controlled so as to be lower than 15 [kPa] with respect to the total value (that is, 15 [kPa] + Pm + Ph > Ps) .

### <Others>

It is to be noted that the present invention is not limited to the foregoing embodiment, but includes various modifications within a scope not departing from the spirit of the present invention. For example, the present invention is not limited to including all of the configurations described in the foregoing embodiment, but includes configurations obtained by omitting a part of the configurations. In addition, a part of a configuration according to a certain embodiment can be added to or replaced with a configuration according to another embodiment.

### Description of Reference Characters

- 1:: Dissolving tank
- 2:: Hopper
- 4:: Spray tank
- 5:: Collecting portion
- 7:: Molten metal
- 9:: Bubble
- 11,: 11A, 11B: Molten metal nozzle
- 12:: Molten metal nozzle insertion hole
- 17:: Opening end (lower end) of the molten metal nozzle
- 18:: Orifice portion
- 18A:: Orifice portion
- 19:: Upper end of the molten metal nozzle
- 20:: Spray nozzle
- 30:: Gas discharge pipe
- 31:: Gas supply pipe
- 32:: Gas supply pipe
- 33:: Gas discharge pipe
- 40:: Inert gas
- 42:: Inert gas
- 43:: Inert gas
- 50:: Gas flow passage
- 71:: Gas injecting nozzle
- 91:: Injection hole (through hole)
- 101:: Bottom surface
- 102:: Opening portion
- 200:: Gas injector

## Claims

1. A control method of a metal powder manufacturing apparatus, the metal powder manufacturing apparatus including a crucible (100) that is housed in a dissolving tank (1), and that can receive a melting raw material before being molten, a molten metal nozzle (11) that is attached to an opening portion (102) disposed in a bottom surface (101) of the crucible (100), and that has a lower end located within a spray tank (4), a plurality of gas injecting nozzles (71) that are arranged on a periphery of the molten metal nozzle (11) within the spray tank (4), and that jet a gas fluid to a molten metal made to flow down from the molten metal nozzle (11), and an orifice portion (18) that is disposed in an upstream portion of a flow passage in the molten metal nozzle (11), an inside diameter of the orifice portion (18) being equal to or more than 0.8 mm and equal to or less than 3 mm, **characterized in that** the control method comprising:
making a pressure of the spray tank (4) higher than a total value of pressure acting on an upper end of the molten metal nozzle (11) and a pressure of the dissolving tank (1) when the melting raw material is molten within the crucible (100); and
making the pressure of the spray tank (4) lower than the total value when the molten metal within the crucible (100) is made to flow down into the spray tank (4) via the molten metal nozzle (11).

2. The control method of the metal powder manufacturing apparatus according to claim 1, wherein
the inside diameter of the orifice portion (18) is equal to or more than 1 mm and equal to or less than 2 mm.

3. The control method of the metal powder manufacturing apparatus according to claim 1 or 2, wherein
when the melting raw material is molten within the crucible (100), the pressure of the spray tank (4) is at least higher than 1[kPa] and lower than 20[kPa] with respect to the total value of the pressure acting on the upper end of the molten metal nozzle (11) and the pressure of the dissolving tank (1).

4. The control method of the metal powder manufacturing apparatus according to any one of claim 1 to 3, wherein
a head pressure as at least one of the pressures acting on the upper end of the molten metal nozzle (11) is computed on a basis of a density and a quantity of the melting raw material.

5. The control method of the metal powder manufacturing apparatus according to any one of claim 1 to 4, wherein
an adjustment of the pressure of the spray tank (4) is made by supplying gas to the spray tank (4), and
an adjustment of the pressure of the dissolving tank (1) is made by discharging gas from the dissolving tank (1).

6. The control method of the metal powder manufacturing apparatus according to claim 3, wherein
an adjustment of the pressure of the spray tank (4) is made by supplying gas to the spray tank (4) and discharging gas from the spray tank (4).

7. The control method of the metal powder manufacturing apparatus according to any one of claim 1 to 6, wherein
the molten metal nozzle (11) is a plurality of molten metal nozzles plurally attached to the crucible (100), and
the plurality of gas injecting nozzles (71) are arranged on a periphery of each of the plurality of molten metal nozzles (11).

8. A metal powder manufacturing apparatus comprising:
a crucible (100) that is housed in a dissolving tank (1), and that can receive a melting raw material before being molten;
a molten metal nozzle (11) that is attached to an opening portion (102) disposed in a bottom surface (101) of the crucible (100), and that has a lower end located within a spray tank (4); and
a plurality of gas injecting nozzles (71) that are arranged on a periphery of the molten metal nozzle (11) within the spray tank (4), and that jet a gas fluid to a molten metal made to flow down from the molten metal nozzle (11), **characterized by**
an orifice portion (18) that is disposed in an upstream portion of a flow passage in the molten metal nozzle (11); and
an inside diameter of the orifice portion (18) being equal to or more than 0.8 mm and equal to or less than 3 mm.

9. The metal powder manufacturing apparatus according to claim 8, wherein
the orifice portion (18) is disposed at an upper end of the flow passage in the molten metal nozzle (11).

10. The metal powder manufacturing apparatus according to claim 8 or 9, wherein
the orifice portion (18A) includes a reversely tapered flow passage that increases in inside diameter toward the lower end of the molten metal nozzle (11A).

11. The metal powder manufacturing apparatus according to any one of claim 8 to 10, wherein
an upper end of the molten metal nozzle (11B) is located above the bottom surface (101) of the crucible (100) .

12. The metal powder manufacturing apparatus according to any one of claim 8 to 11, wherein
the inside diameter of the orifice portion (18) is equal to or more than 1 mm and equal to or less than 2 mm.

13. The metal powder manufacturing apparatus according to any one of claim 8 to 12, wherein
a length of the orifice portion (18) is equal to or less than 10 mm.

14. The metal powder manufacturing apparatus according to any one of claim 8 to 12, wherein
a length of the orifice portion (18) is equal to or more than 1 mm and equal to or less than 5 mm.

15. The metal powder manufacturing apparatus according to any one of claim 8 to 14, wherein
the molten metal nozzle (11) is a plurality of molten metal nozzles plurally attached to the crucible (100), and
the plurality of gas injecting nozzles (71) are arranged on a periphery of each of the plurality of molten metal nozzles (11).
